# DEMANDE DE BREVET EUROPEEN

(11) **EP 0 936 798 A1**
(43) Date de publication de la demande: **18.08.1999**
(21) Numéro de dépôt: 99400328.3
(22) Date de dépôt: 11.02.1999
(51) Int. Cl.: H04M 19/08, H04N 1/00

(54) **Télécopieur comportant des moyens de prise de ligne à alimentation secourue**

(30) Priorité: 11.02.1998 FR 9801609
(71) Demandeur: SAGEM SA, 75116 Paris (FR)
(72) Inventeur: Auffray, Jean-Paul, 95800 Cergy Saint Christophe (FR)
(74) Mandataire: Bloch, Gérard

(57) **Abrégé**

Le télécopieur comporte une alimentation (10) pour alimenter, depuis une source d'alimentation principale (22), des moyens (5) pour, à travers des moyens d'isolation galvanique (4), prendre une ligne téléphonique (21) d'un réseau téléphonique commuté, et il comporte une alimentation de secours (20) agencée pour être alimentée par la ligne téléphonique (21) et alimenter les moyens de prise de ligne (5).

## Description

Un terminal de téléphonie relié à une ligne du réseau téléphonique commuté doit présenter, à son utilisateur, des garanties de sécurité contre tout choc électrique.

Dans le cas d'un poste téléphonique élémentaire, dont les circuits de base ont une consommation relativement faible, celui-ci est téléalimenté en courant continu par la ligne téléphonique et la seule protection contre les surtensions en ligne, comme les effets de foudre, est apportée par des écrêteurs de surtension.

Si l'on prévoit par exemple une fonction mains-libres, dont les circuits anti-échos ont une consommation excessive pour la ligne, il faut alors alimenter le haut-parleur correspondant et les circuits anti-échos à partir d'une alimentation locale, comme le secteur.

En pareil cas, on peut choisir de maintenir la téléalimentation des circuits de base pour la fonction téléphonique, à faible consommation, à partir de la ligne et de n'alimenter, depuis le secteur, que les circuits supplémentaires anti-échos. Cependant, il faut alors établir une liaison phonique bidirectionnelle, à isolation galvanique et de bonne qualité phonique, reliant les circuits téléphoniques de base, situés côté ligne (côté chaud), aux circuits anti-échos côté froid, protégé. Une telle liaison est techniquement délicate à réaliser, pour éviter des distorsions et des échos électriques parasites, susceptibles de perturber les circuits anti-échos, si bien que les composants correspondants représentent un coût et un volume élevés.

Pour éviter cette liaison, la demanderesse a songé à déporter, côté froid, les circuits de base à côté des circuits anti-échos, et à les alimenter alors, eux aussi, localement par le secteur. Cependant, toute défaillance de celui-ci met totalement hors service le poste téléphonique.

Le problème exposé ci-dessus se pose dans les mêmes termes pour tout terminal de transmission de signaux phoniques ou de données, à alimentation locale, relié à une ligne téléphonique, par exemple un télécopieur avec poste téléphonique associé.

La présente invention vise à permettre le maintien de fonctions téléphoniques dans un télécopieur en cas de défaillance de la source d'alimentation principale, comme le secteur.

A cet effet, l'invention concerne un télécopieur comportant des moyens d'alimentation pour alimenter, depuis une source d'alimentation principale, des moyens pour, à travers des moyens d'isolation galvanique, prendre une ligne téléphonique d'un réseau téléphonique commuté, télécopieur caractérisé par le fait qu'il comporte des moyens de secours agencés pour être alimentés par la ligne téléphonique et alimenter les moyens de prise de ligne.

Ainsi, en fonctionnement normal, les moyens de prise de ligne disposent de toute l'énergie voulue, grâce à la source principale, et, en cas de défaillance celle-ci, la ligne téléphonique se substitue à celle-ci dans cette fonction d'alimentation. En d'autres termes, le réseau téléphonique est ici un réseau auxiliaire de distribution d'énergie, en secours, au moins partiel, de la source d'alimentation principale, en général constituée par le réseau de distribution électrique. On peut ainsi assurer au moins une fonction téléphonique minimale.

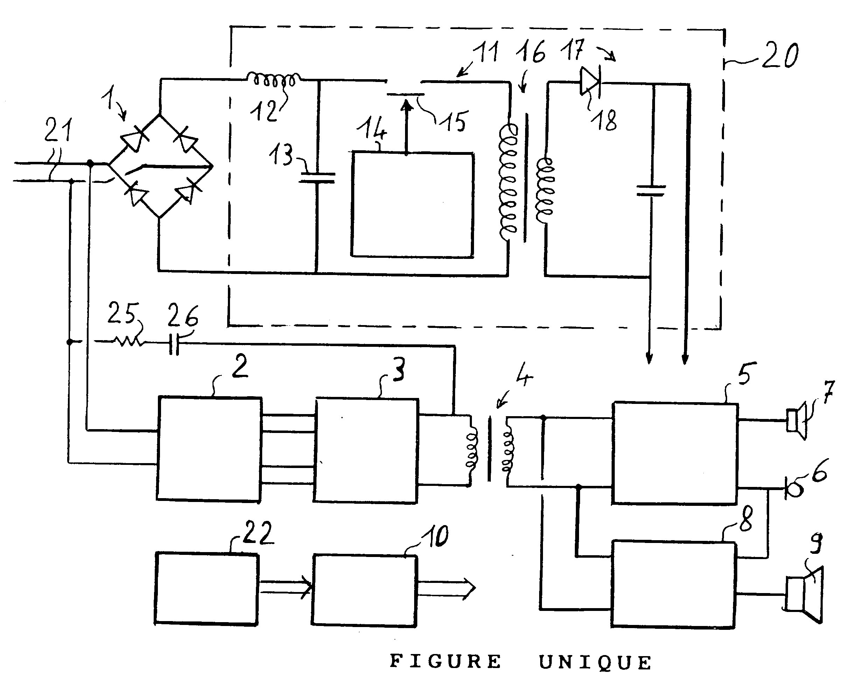

L'invention sera mieux comprise à l'aide de la description suivante d'une forme de réalisation préférée d'un télécopieur comportant des moyens de prise de ligne selon l'invention, en référence à la figure unique du dessin annexé.

Le télécopieur représenté comporte un poste téléphonique intégré. Il comporte une chaîne phonique de circuits 2, 3, 4 reliant une ligne téléphonique 21 à des circuits d'interface utilisateur, constitués d'un combiné, comportant un microphone 6, ici à faible consommation, à électrets, et un écouteur 7, et de circuits d'interface 5 pour ceux-ci, permettant la prise de ligne téléphonique, c'est-à-dire la réponse à un appel entrant et/ou l'émission d'un appel.

Les circuits 2, reliés à la ligne 21, sont des circuits classiques d'adaptation à celle-ci, c'est-à-dire en particulier des circuits de conversion 2 fils/4 fils, séparant et filtrant, au gabarit voulu, la voie émission et la voie réception. Les circuits 3 effectuent l'opération inverse de conversion 2 fils/4 fils pour la transmission bidirectionnelle de signaux phoniques sur un unique circuit d'isolation galvanique 4, ici un transformateur, relié par son secondaire aux circuits 5 et à des circuits 8 de mains-libres commandant un haut-parleur 9 et reliés au microphone 6 par une liaison pour signaux phoniques. Les circuits 5 et 8 comportent en outre des circuits spécifiques à la fonction télécopie, tels que modem, unité centrale à microprocesseur, mémoire de télécopies. Les circuits à forte consommation, scanner et tête d'imprimante, font partie des circuits 8, alimentés localement par une alimentation 10, à isolation galvanique, depuis une source primaire 22, ici alternative et constituée par le secteur.

S'il avait été prévu une alimentation locale par accumulateurs ou pile, la nécessité d'une isolation galvanique à ce niveau n'existerait pas.

Il est ici prévu une liaison d'écoute haute-impédance reliant un fil de ligne au primaire du transformateur 4 et constituée d'une résistance série 25, de forte valeur devant les 600 ohms d'impédance caractéristique de ligne 21, et d'un condensateur 26 de blocage du 48 volts continu de ligne. Cette liaison permet aux circuits de télécopie (5) d'analyser les signaux de ligne pour détecter des signaux de modem d'un télécopieur appelant et y répondre en prenant la ligne pour la fonction télécopie. Outre l'alimentation ou source secondaire 10, le télécopieur comporte une autre alimentation secondaire 20 alimentée depuis la ligne 21, ligne 21 qui fait donc office, elle aussi, de source primaire.

En tête de l'alimentation 20 est prévu ici un pont redresseur à diodes 1, afin de tolérer des inversions de polarité en entrée de cette alimentation 20. Le sous-ensemble d'entrée 11 de celle-ci comporte un filtre constitué d'une inductance série 12 et d'un condensateur 13 en parallèle sur les deux fils de ligne. Un transistor série de découpage 15 est commandé par un oscillateur 14 et découpe ou hache ainsi le courant continu 48 volts provenant de la ligne 21 pour transmettre des impulsions à travers le transformateur 16. Le secondaire de celui-ci alimente un circuit redresseur/intégrateur de filtrage, représenté très schématiquement par une diode série 18 suivie d'un condensateur parallèle 19. La tension continue aux bornes du condensateur 19, réglée par le rapport de transformation du transformateur 16, alimente les circuits 5, 6, 7. Il peut être prévu plusieurs enroulements ou prises intermédiaires secondaires du transformateur 16 pour disposer de plusieurs tensions, par exemple 5 volts et 12 volts.

Le fonctionnement des divers circuits va maintenant être expliqué plus avant.

Lorsque le secteur 22 est présent, il alimente (10) les circuits de mains-libres et de télécopie 8, 9. Que le secteur soit présent ou absent, la ligne 21 peut alimenter les circuits 5 à 7 à travers les circuits 1 et 20, cette alimentation pouvant être prévue pour être inhibée en cas de présence secteur, comme exposé plus loin. Comme déjà exposé, les signaux phoniques traversent les circuits 2, 3, 4 et les circuits 5 et 8 accèdent simultanément au secondaire du transformateur 4.

Un avantage de ce schéma réside dans le fait que la transmission des signaux phoniques entre la partie chaude (2, 3) du télécopieur, reliée galvaniquement à ligne 21 ou éventuellement isolée sommairement de celle-ci par des condensateurs de blocage du 48 volts continu, et la partie froide, protégée, 5 à 10, ne nécessite qu'une seule liaison phonique (4) à isolation galvanique, du fait que la transmission est full-duplex, en une paire de fils. Les circuits 5 et 8 assurent le passage 2/4 fils et inversement pour relier, en deux fils, leurs transducteurs 6, 7, 9 et le modem au secondaire du transformateur 4. Le transformateur 4 assure aussi le passage de signaux de données dans la bande téléphonique, relatifs au modem du télécopieur, appartenant par exemple au circuit 5.

Il aurait pu être prévu, en variante, un seul transformateur d'isolation galvanique pour la téléalimentation et transmission des signaux phoniques. Par exemple, une modulation de phase des impulsions de téléalimentation permettrait de transmettre ces signaux. Une transmission numérique de ces signaux présenterait alors l'avantage de pouvoir utiliser des circuits de modulation et un transformateur très élémentaires, de précision limitée, puisque la numérisation offre une marge de protection contre les distorsions.

En l'absence de secteur 22, les circuits 8 sont hors tension, mais les circuits 5 conservent une alimentation, depuis la ligne 21, et assurent donc la fonction téléphonique de base (combiné), et éventuellement des fonctions de télécopie, par exemple échange de messages de télécopie avec mémorisation de ceux-ci.

Il peut être prévu de limiter l'activité de l'alimentation 20 aux périodes pendant lesquelles la ligne 21 est utilisée, ceci en particulier si la consommation nécessaire aux circuits (5) qu'elle alimente est excessive par rapport au courant de fuite toléré en ligne par le central public. En pareil cas, un interrupteur ouvert au repos est interposé dans le circuit d'entrée de l'alimentation 20, et n'est fermé que lors d'une prise de ligne.

Il peut s'agir d'un crochet de combiné, d'un bouton de commande manuelle, ou encore d'un contact de relais (ou circuit intégré), de commande manuelle ou automatique pour la prise de ligne en départ ou en arrivée.

Les circuits 2 peuvent, en variante, comporter un tel interrupteur et fournir le courant ligne à l'alimentation 20.

Des variantes sont envisageables, quant à la coopération des alimentations 10 et 20 pour alimenter les circuits 5, 6, 7 et 8.

Il peut ainsi être prévu d'alimenter, en plus, les circuits 5 depuis le réseau 22, par l'alimentation 10, c'est-à-dire qu'on prévoit une alimentation redondante ou secourue (10, 20) pour ceux-ci, au lieu de leur seule alimentation par ligne 21. On détecte alors la présence de la tension secteur 22, et de préférence la présence de la tension en sortie de l'alimentation 10 (pour détecter une défaillance de celle-ci), et on inhibe l'alimentation 20, par exemple par blocage, en position d'ouverture, du transistor 15. Un photocoupleur, alimenté par l'alimentation 10, convient à cet effet. Une telle commutation d'alimentations 10 - 20 évite de consommer, en fonctionnement normal, de l'énergie provenant de la ligne téléphonique 21.

Dans une variante, ayant encore le même but de substitution d'alimentations, on ajoute une troisième alimentation, ayant la structure de l'alimentation 20 (transformateur et diode de sortie), alimentée depuis le secteur 22 et reliée en sortie à l'alimentation 20, pour alimenter les circuits 5, 6, 7.

Le réglage des rapports de transformation des deux transformateurs respectifs comme 16 est tel, compte tenu des tensions d'entrée, 48 volts continu et 220 volts efficaces redressés, que la troisième alimentation, ajoutée, fournit une tension de sortie légèrement supérieure à celle de son homologue 20, qui, ainsi, ne débite pas et est donc inhibée en présence du secteur. On obtient ainsi une commutation statique entre les deux alimentations.

Toujours selon le principe de cette variante, à commutation statique de deux alimentations reliées l'une à l'autre en sortie, on peut prévoir de s'en tenir à deux alimentations au total, à sorties reliées en parallèle et isolées galvaniquement des entrées respectives (alimentations 10 et 20), et d'alimenter globalement tous les circuits d'interface utilisateur, côté froid (5 à 9). En cas de défaillance de la source 22, un circuit détecteur branché en entrée de l'alimentation 10, et donc ici à sortie isolée, commande alors des circuits d'inhibition de l'alimentation des circuits 8, si la ligne 21 ne peut fournir la puissance nécessaire. Les circuits d'inhibition, ou de coupure d'alimentation, peuvent être un jeu d'interrupteurs de distribution d'alimentation, tels que relais ou circuits intégrés interrupteurs spécifiques, ou encore des portes logiques de commande des divers circuits, agencées pour interdire toute consommation ou faire passer en état de veille, à faible consommation.

Dans le cas de circuits C.MOS, dont la consommation est proportionnelle à la fréquence de fonctionnement, ces portes peuvent par exemple bloquer un oscillateur de base de temps commandant le fonctionnement général des divers circuits.

## Revendications

1. Télécopieur comportant des moyens d'alimentation (10) pour alimenter, depuis une source d'alimentation principale (22), des moyens (5) pour, à travers des moyens d'isolation galvanique (4), prendre une ligne téléphonique (21) d'un réseau téléphonique commuté, télécopieur caractérisé par le fait qu'il comporte des moyens de secours (20) agencés pour être alimentés par la ligne téléphonique (21) et alimenter les moyens de prise de ligne (5).

2. Télécopieur selon la revendication 1, dans lequel les moyens de secours (20) comportent des moyens (16) de séparation galvanique disposés entre la ligne (21) et les moyens de prise de ligne (5).

3. Terminal selon la revendication 1, dans lequel les moyens d'alimentation (10) et les moyens de secours (20) sont reliés en sortie pour alimenter les moyens de prise de ligne (5).

4. Terminal selon la revendication 3, dans lequel les moyens d'alimentation (10) et les moyens de secours (20) comportent des moyens d'inhibition pour inhiber ceux-ci (20) lorsque ceux-là (10) sont opérationnels.

5. Terminal selon la revendication 4, dans lequel les moyens d'inhibition sont agencés pour effectuer une commutation statique entre les sorties respectives des moyens d'alimentation (10) et des moyens de secours (20).

6. Terminal selon l'une des revendications 3 à 5, dans lequel les moyens d'alimentation (10) et les moyens de secours (20) alimentent aussi des circuits de télécopie (8) et il est prévu des moyens de détection de la défaillance de la source d'alimentation principale (22) pour commander des moyens de coupure de l'alimentation des circuits de télécopie (8).

7. Terminal selon la revendication 6, dans lequel les moyens de coupure sont agencés pour bloquer un oscillateur de commande de circuits CMOS.

8. Terminal selon l'une des revendications 1 à 7, dans lequel les moyens de prise de ligne (5) sont agencés pour établir une liaison bidirectionnelle avec la ligne (21) à travers un transformateur unique (4) des moyens d'isolation galvanique.
